# EUROPEAN PATENT APPLICATION

(11) **EP 2 887 580 A1**
(43) Date of publication of application: **24.06.2015**
(21) Application number: 13382548.9
(22) Date of filing: 23.12.2013
(51) Int. Cl.: H04L 12/24

(54) **Method and system for modifying configuration parameters on a user equipment and an Auto Configuration Server-Gateway**

(71) Applicant: Telefonica S.A., 28013 Madrid (ES)
(72) Inventor: Núñez Sanz, Manuel, 28013 Madrid (ES); Castell Lucía, Juan Antonio, 28013 Madrid (ES)
(74) Representative: Carlos Hernando, Borja

(57) **Abstract**

The Auto Configuration Server-Gateway, comprising: a first communication unit adapted to include an specific interface allowing communication with a Policy Manager (PM) entity, said communication comprising at least receiving a policy rule from said Policy Manager (PM) entity; an adaptation unit configured to translate said received policy rule to a communication protocol appropriate for a user equipment (CPE) connected to said Auto Configuration Server-Gateway (ACS-GW) and vice versa; and a second communication unit adapted to include a communication interface and configured to communicate with said user equipment (CPE), wherein said Policy Manager (PM) entity comprises a Policy and Charging Rules Function (PCRF) or a Policy Decision Point (PDP).

## Description

### Field of the invention

The present invention generally relates to the field of communication. Particularly, present invention relates to a method and system for modifying configuration parameters on a user equipment and also relates to an Auto Configuration Server-Gateway.

### Background of the invention

In certain situations it is necessary to change in real time the conditions of a fixed broadband line (e.g. xDSL, fiber, etc.) of a certain user. These situations are determined by factors specific to the user (preferences, payment status, changes in the services demanded, etc.), to the broadband provider (line conditions, saturation time, offers of new services...) or external to both ones (regulation for example).

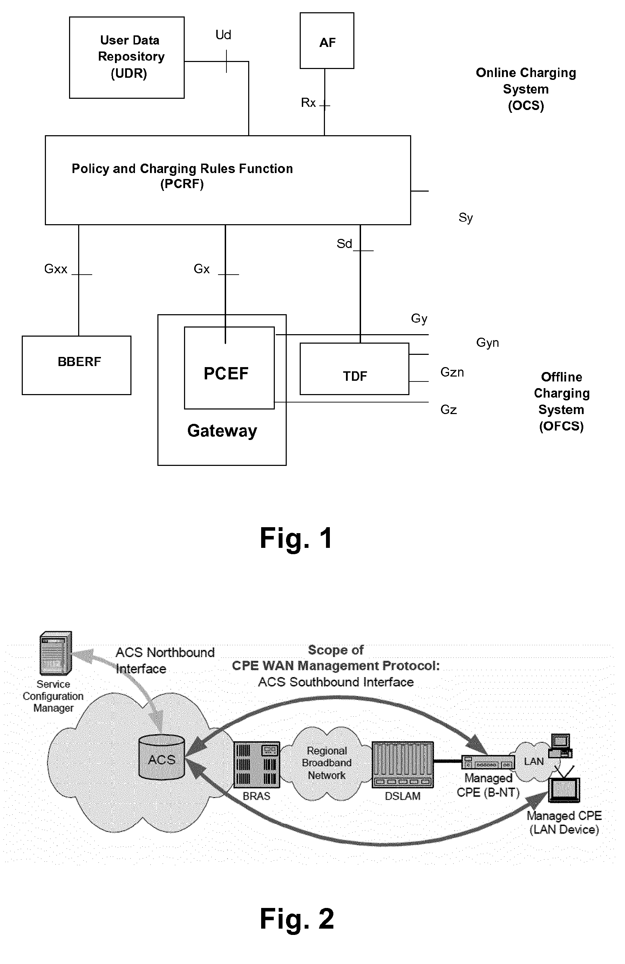

Fig. 1 shows the last release of the current Third Generation Partnership Project (3GPP) Policy and charging control architecture. In real time a Policy and Charging Rules Function (PCRF) obtains the different inputs to determine the most suitable policy, and using a Gx and a Gxx interfaces applies these policies to the enforcement point (Bearer Binding and Event Reporting Function (BBERF) or/and Policy and Charging Enforcement Function (PCEF)).

Fig. 2 shows an xDSL auto-configuration architecture defined by the Broadband Forum (BBF). The guiding principle around BBF's auto-configuration architecture and framework is to configure a Customer Premises Equipment (CPE) based on a predefined service configuration template located in the service provider's network (ACS). This ACS is populated periodically through the Service Configuration Manager, which is a management system integrated in Business Support System (BSS) of the carrier.

Several Telco carriers are betting on this kind of architectures as a solution to achieve a better resources management and for building services in a cheaper and faster manner. But there are some gaps that it's needed to be filled.

Patent application WO-A1-2013/082987 "Method and system for performing resource control on local offload data" describes a method to face the problems with resource control on local offload data to guarantee the QoS of the offload service launched by the user equipment accessed through the HeNB/HNB. This method covers the application of resources control in the network element which has control of the user equipment's session when it offloads to a trusted fixed network (HeNB/HnB), however it is not related with the knowledge and application of the equipment's configuration, independently where it is located.

WO-A1-2013/050808 "BNG to PCRF mediation entity for BBF and 3GPP access interworking" is related to fixed-mobile convergence purposes, and discloses a new entity called ME (Mediation Entity) that is added with the intention to outfit with BBERF and PCEF capabilities to BNG (BRAS) element in 3GPP architecture and as a BPCEF element in BBF architecture, thus obtaining an easy integration with 3GPP-PCRF element and allowing a BNG to be controlled by a PCRF. Said patent application it is not related with the user equipment configuration.

US-A1-2013/0103846 "Method for policy and charging rules function (PCRF) informing centralized deployment functional architecture (BPCF) of user equipment access information" discloses a system and method for performing QoS control on a user equipment using an IPsec tunnel. In an fixed-mobile convergence scenario, this patent application give the method to maintain the quality of service policies on a user when the user experiences a handover from a radio access to a fixed one, by the PCRF sending the IPsec tunnel information to BPCF which executes a QoS procedure on the user equipment's services. So, it does not comprise the whole configuration of the equipment but only the quality of service and besides, it does it by applying the quality of service on the IPSec tunnel termination in the BPCF, not in the user equipment.

CN-A-102316602 "System, device and method for accessing user equipment into mobile network" defines an X-Mobile Anchor Gateway (X-MAG) between the fixed network and the mobile network in order to achieve the connection of the user equipment both to a fixed network and a mobile network (non 3GPP). It is also no related to the user equipment configuration.

WO-A1-2013/064070A1 "Method for realizing reflection quality of service mechanism" involves the decision process whether the user equipment performs a reflection QoS mechanism during a tunnel establishment authentication process or an access authentication process. The mission of this process is protecting legitimate user equipment and preventing illegitimate user equipment seizing network resources, not the configuration of the user equipment, neither in real-time nor in other ways.

In current architectures or solutions, if a broadband provider (with xDSL and fiber lines), according to information obtained in real time (line state, user service requests...) plus its own business policies, needs to change the conditions of a service (bandwidth, QoS, delay, allowed ports, allowed protocols...), usually sends an instruction to its PCRF (or equivalent architecture). This will change the line conditions using its Gx and Gxx interfaces, but it does not have a way to invoke a change in the user equipment (CPE according BBF terminology), and therefore getting an E2E approach. If the PCRF does not trigger changes in real time destined to the CPE, it will not be possible for example to modify the upstream QoS to specific flows, set up the firewall included in the CPE (open/close ports, break up some specific flows...), or to change the configuration of specific services (VoIP, videoconference, TV service...).

The current "northbound interface" of ACS servers is an off-line interface to populate a predefined profile to be available to apply in each CPE. So, no current solutions could change the CPE in real time according to just in time data and as a result a policy decision from PCRF or other equivalent real time policy manager.

Therefore, present invention addresses this issue by providing a solution enabling real-time decision changes in the physical and logic conditions of the user equipment or CPE so that the latter being able to provide suitable E2E services to the user.

### Summary of the Invention

According to a first aspect there is provided a method for modifying configuration parameters on a user equipment, wherein said user equipment is connected to an Auto Configuration Server-Gateway via a communication protocol. On contrary of the known proposals the method comprises: a) receiving, a Policy Manager entity implemented in a first architecture, a request concerning at least one policy rule that govern the conditions of a particular service that a user is using; b) receiving, said Auto Configuration Server-Gateway implemented in a second architecture and connected to said Policy Manager entity via an specific interface, a response, from said Policy Manager entity, to said request comprising said policy rule governing the conditions of said particular service that a user is using, c) establishing, said Auto Configuration Server-Gateway, a configuration for said user equipment according to said received policy rule and further providing the established configuration to said user equipment; and d) modifying, the user equipment, its configuration parameters according to said providing.

The request in said step a) can be performed by a service provider through an Application Function entity of said first architecture or alternatively by the Auto Configuration Server-Gateway.

In case said request being performed by the Auto Configuration Server-Gateway and previous the requesting, according to an embodiment, the user equipment demands to the Auto Configuration Server-Gateway information regarding its configuration parameters. The demand done by the user equipment generally will comprise data categorizing the user equipment including at least model of the equipment, version, telephone number and/or line identification.

The configuration established for the user equipment can be further stored in a database of the Auto Configuration Server-Gateway.

According to an embodiment, said steps b), c) and d) are performed every time that said policy rule governing the conditions of said particular service is modified by the Policy Manager entity.

The Policy Manager entity according to different embodiments can be a Policy and Charging Rules Function of the Third Generation Partnership Project or 3GPP, so that said first and second architectures are different architectures, or alternatively, can be a Policy Decision Point of the BroadBand Forum or BBF, so that both architectures, first and second, are the same architecture.

According to a second aspect there is provided a system for modifying configuration parameters on a user equipment, wherein said user equipment (e.g. router, a switch and/or a gateway is connected to an Auto Configuration Server-Gateway via a communication protocol, the system comprising: a Policy Manager entity implemented in a first architecture configured to receive a request concerning at least one policy rule that govern the conditions of a particular service that a user is using; said Auto Configuration Server-Gateway implemented in a second architecture and connected to said Policy Manager entity via a specific interface, said Auto Configuration Server-Gateway being at least configured to: receive a response from said Policy Manager entity to said request comprising said policy rule governing the conditions of said particular service; establish a configuration for said user equipment according to said received policy rule; and provide said established configuration to said user equipment allowing the latter for a modification of its configuration parameters.

The Auto Configuration Server-Gateway includes a first communication unit, adapted to include said specific interface and configured to communicate with said Policy Manager entity; an adaptation unit, configured to translate said received policy rule from the Policy Manager entity to said communication protocol appropriate for said user equipment and vice versa; and a second communication unit, adapted to include a communication interface and configured to communicate with said user equipment.

Furthermore, the Auto Configuration Server-Gateway may further include a database.

The specific interface is for information exchange and invokes an instruction, over a protocol, according to a preferred embodiment of the invention, such as a DIAMETER protocol. The communication protocol comprises a TR-069 protocol.

According to a third aspect there is provided an Auto Configuration Server-Gateway including a first communication unit adapted to include a specific interface allowing communication with a Policy Manager entity, wherein said communication at least comprises receiving a policy rule from said Policy Manager entity. The Auto Configuration Server-Gateway also includes an adaptation unit configured to translate said received policy rule to a communication protocol appropriate for a user equipment connected to said Auto Configuration Server-Gateway and vice versa and a second communication unit adapted to include a communication interface and configured to communicate with said user equipment. Preferably, the Policy Manager entity is a Policy and Charging Rules Function or a Policy Decision Point.

Present invention makes possible the real time changes E2E in the conditions (connections and services) of the fixed users. The fact that can be changed dynamically the configuration of every user equipment CPE will allow: For Telco operators, a significant reduction of both CAPEX and OPEX costs because will be possible a reduction of investment in management systems; "Time to Market" reduction for new services for both Telco Operators and third parties because is made in real time; A better user's QoE because service will know the real physical characteristics of current channel.

The possibility that the Telco Operators' services or the third parties ones (with service agreement with the service provider) may know first-hand the real conditions of the client's fixed line in real-time through the data sending by user equipment, makes possible to create a handful of possible new services or to improve a lot of already existent ones.

### Brief Description of the Drawings

The previous and other advantages and features will be more fully understood from the following detailed description of embodiments, with reference to the attached, which must be considered in an illustrative and non-limiting manner, in which:
Fig. 1 illustrates the latest release (rel. 12) of the 3GPP Policy and Charging Control architecture.
Fig. 2 illustrates an example of the BBF xDSL Auto-Configuration Architecture.
Fig. 3 illustrates a proposed architecture for modifying configuration parameters on a user equipment CPE according to the embodiment where the Policy Manager entity is a Policy and Charging Rules Function PCRF of the Third Generation Partnership Project (3GPP), so that said the architecture of the Policy and Charging Rules Function PCRF and the architecture of the Auto Configuration Server-Gateway ACS-GW, first and second respectively, are different architectures.
Fig. 4 illustrates the proposed Auto Configuration Server-Gateway ACS-GW of the third aspect of the present invention.
Fig. 5 is a flow diagram illustrating the flow for requesting the user equipment CPE configuration, according to an embodiment.
Fig. 6 is a flow diagram illustration how the user equipment CPE configuration can be updated, according to an embodiment.

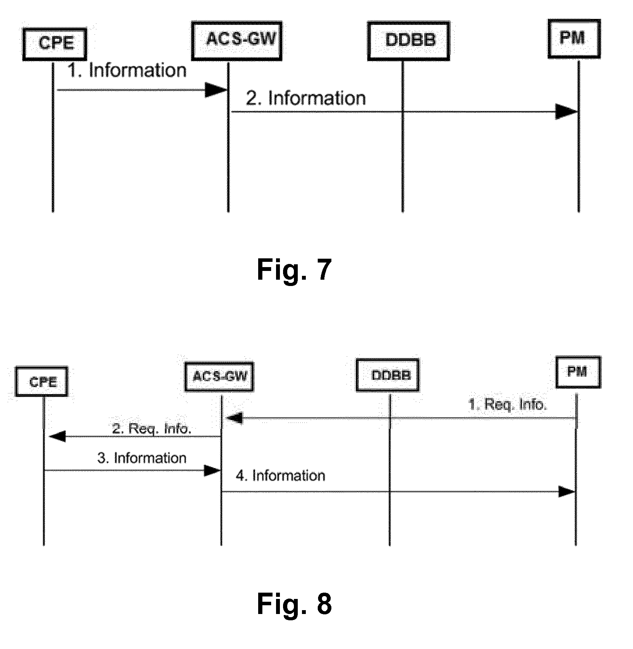

Fig. 7 is a flow diagram illustration how the user equipment CPE can directly provide its configuration to the Policy Manager entity, according to an embodiment.
Fig. 8 is a flow diagram illustration how the Policy Manager entity can also directly request the user equipment CPE configuration, according to an embodiment.

### Detailed Description of Several Embodiments

In this invention disclosure, the term management refers to the control of an element (circuit, network ...) in order to configure said element or its handling with a certain purpose. It doesn't refer to management in the sense of equipment's' administration (alarms collection, inventory, etc.).

Policy term has to be understood as a set of predefined rules which define a behavior when appear a group of specific inputs.

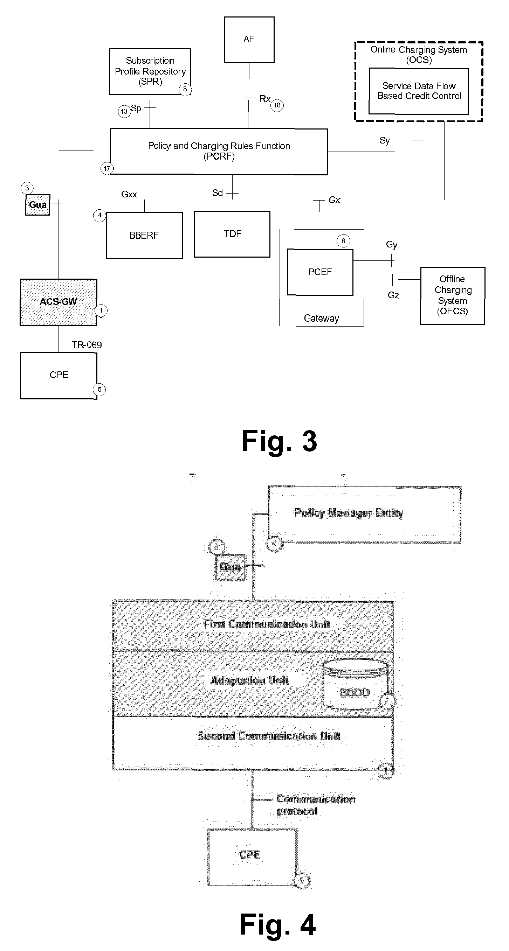

Fig. 3 illustrates an exemplary scenario where the present invention can be deployed to modify configuration parameters on a user equipment CPE. In accordance with this example, the Policy Manager entity PM is a Policy and Charging Rules Function PCRF of the Third Generation Partnership Project (3GPP), so that the architecture in which the Policy and Charging Rules Function PCRF is implemented and the architecture in which the proposed Auto Configuration Server-Gateway ACS-GW is implemented, first and second respectively, are different architectures.

In accordance with another embodiment, in this case not illustrated, the Policy Manager PM entity could be a Policy Decision Point (PDP) of the BroadBand Forum (BBF). Therefore in this case the proposed Auto Configuration Server-Gateway ACS-GW and the Policy Decision Point PDP entity will be implemented in the same architecture.

To allow the modification of the configuration parameters of the user equipment CPE, present invention defines a specific interface or reference point termed as Gua (as shown in Fig. 3). In addition the invention modifies the Auto Configuration Server-Gateway ACS and Policy Manager PM entities (Policy and Charging Rules Function PCRF in 3GPP or Policy Decision Point PDP in BBF) to be able to manage said new interface and its flows associated.

The specific interface, Gua, is an on-line interface managing the same amount of procedures that other equivalents reference points (Gx, Gxx, Sd). Furthermore, it requests policy rules for instance PCC rules from Auto Configuration Server-Gateway ACS-GW to Policy Manager PM entity, it provisions said policy rules from the Policy Manager PM entity to the ACS-GW, etc. In a preferred embodiment, said specific interface Gua is a DIAMETER protocol because is the protocol used to implement the rest of reference points (Sp, Rx, Gx...), however any other protocol could be also used.

Fig. 4 illustrates the proposed Auto Configuration Server-Gateway ACS-GW. This Auto Configuration Server-Gateway ACS-GW is able to manage the procedures coming from the Policy Manager PM entity and to translate them, by means of an adapting unit, to a suitable communication protocol, for instance to a TR-069 protocol in order to communicate with the user equipment CPE.

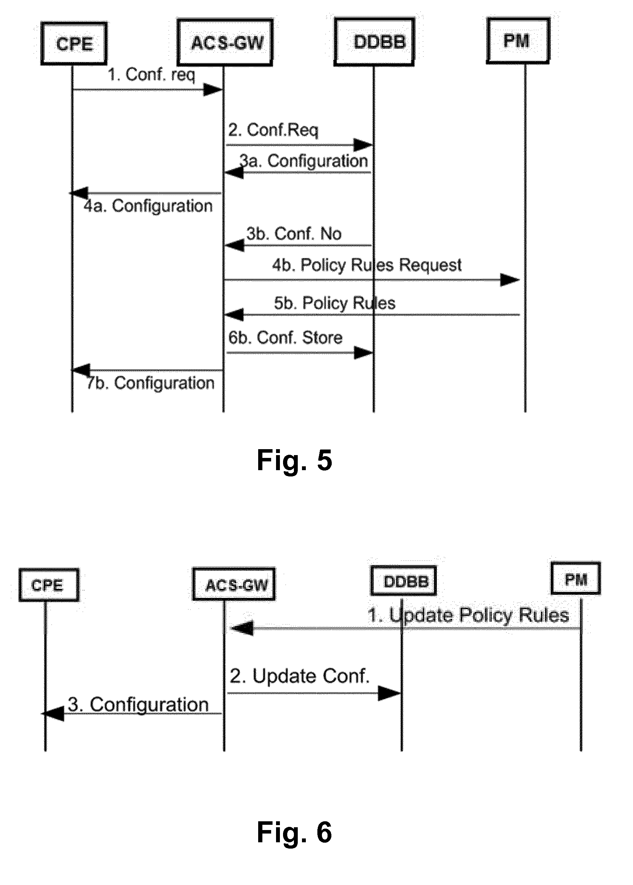

In reference to Fig. 5, when a user equipment CPE needs its configuration parameters, the user equipment CPE can request its configuration to the Auto Configuration Server-Gateway ACS-GW to which is connected (1). This request can include any information that the user equipment user equipment CPE has about itself (such as model of the equipment, version, telephone number, line identification, login user, etc.). Then, the Auto Configuration Server-Gateway ACS-GW looks up the configuration for said user equipment CPE specifically in its database DDBB (2). At this point two options could occur. For instance, it can occurs that the Auto Configuration Server-Gateway ACS-GW has stored the user equipment CPE configuration in the database DDBB so the Auto Configuration Server-Gateway ACS-GW returns said configuration information to the user equipment CPE (3a, 4a) The Auto Configuration Server-Gateway ACS-GW (1) obtains the configuration and returns this information to the user equipment CPE (2).

Alternatively, it can occurs that the Auto Configuration Server-Gateway ACS-GW does not have the configuration (3b) so the Auto Configuration Server-Gateway ACS-GW request (4b) to said Policy Manager PM entity for the policy rules for said user equipment CPE providing any information about the latter in order to identify it (telephone numbers, line identification, login user, etc.), but independent on specific implementations (model, versions, etc.). Then, the Policy Manager PM entity (5b) returns the policy rules to apply to said user equipment CPE. The Auto Configuration Server-Gateway ACS-GW makes the final configuration and preferably stores (6b) it in the database DDBB associated to the user equipment CPE identification data (telephone numbers, line identification, login user, etc.). At that point, (7b) the Auto Configuration Server-Gateway ACS-GW returns the configuration to the user equipment CPE.

According to an embodiment, for instance, as a result of changes in the general network conditions, of a new service invoked by a user, of a decision of a broadband provider or in general of any other event, the Policy Manager PM entity could decide to change the policy rules to apply in the user equipment CPE. Therefore, in this situation the Policy Manager PM entity is who initiates the action as illustrated in Fig. 6.

In reference to Fig. 6 the Policy Manager PM entity decides changes in the policy rules and sends an update to the Auto Configuration Server-Gateway ACS-GW (1) with the new policy rules and the user equipment CPE associated information (telephone number, line identification, login user, etc.). The Auto Configuration Server-Gateway ACS-GW obtains the new configuration from the received polities, and stores (2) the latter in its database DDBB associated to said user equipment CPE. Finally, the Auto Configuration Server-Gateway ACS-GW sends the new configuration to the appropriate user equipment CPE (3).

In other situations and according to its configuration, the user equipment CPE can provide information about itself. For instance, the user equipment CPE can provide an amount of upstream/downstream data, the protocols being used, and new ports demanded, among any other, and in general any information could be obtained from data passing through it. In accordance with said embodiment, the user equipment CPE sends (1) that information to its associated Auto Configuration Server-Gateway ACS-GW, and the latter forwards (2) it to the Policy Manager PM entity.

In yet other situations, the Policy Manager PM entity could need some information of the user equipment CPE, for instance the protocols used by the user equipment CPE or the upstream/downstream data. In accordance with said embodiment, the Policy Manager PM entity requests (1) to the Auto Configuration Server-Gateway ACS-GW and the latter can directly demand said requested information to the user equipment CPE (2).

According to an exemplary use case, a user having an xDSL line installed in his/her house invokes a new "uploading file service" which needs to improve the uplink velocity. This exemplary use case is described in accordance with the embodiment of Fig. 3, e.g. the Policy Manager PM entity is a Policy and Charging Rules Function PCRF entity of the 3GPP architecture. As a consequence of said new service used by the user, an Application Function AF notifies the Policy and Charging Rules Function PCRF entity (17) using the Rx interface (18) that the user is using said service. Other options could be possible: for example, the own user equipment CPE could notify the use of specific protocol/ports, etc. to the Auto Configuration Server-Gateway ACS-GW and indirectly the Policy and Charging Rules Function PCRF will know which policy rule to apply to said situation.

The Policy and Charging Rules Function PCRF with this new information notifies the Auto Configuration Server-Gateway ACS-GW the general policy rule for said service, for example: "Maximize the uplink bandwidth for this user equipment CPE". Consequently, the Auto Configuration Server-Gateway ACS-GW can apply this new policy and obtain the final configuration for the type of model and version of the user equipment CPE. The Auto Configuration Server-Gateway ACS-GW provides this configuration to the user equipment CPE and the latter upon receiving it can change its configuration parameters by changing, for instance, the asymmetric xDSL conditions to obtain the most part of the bandwidth in the uplink instead of downlink.

It has to be noted that technologically, this exemplary use case could also involve the DSLAM element to receive a request from the Policy and Charging Rules Function PCRF entity via the Gxx interface.

According to another exemplary use case also described in accordance with the embodiment of Fig. 3, a user starts a new VoIP conversation with a remote peer; this new VoIP flow has a policy rule in the Policy and Charging Rules Function PCRF entity which indicates to open ports and to improve Quality of Service (QoS) in the network and in the user equipment CPE. So, this event is detected by the user equipment CPE which sends this information to the Auto Configuration Server-Gateway ACS-GW. Then, the Auto Configuration Server-Gateway ACS-GW searches for the configuration stored in its database for this case and return the suitable configuration (for example to prioritize that VoIP flow) in function of model, version, etc. to the user equipment CPE which applies itself the configuration. Finally, the Auto Configuration Server-Gateway ACS-GW sends the information to the Policy and Charging Rules Function PCRF entity for subsequent actions.

The scope of the present invention is defined in the following set of claims.

## Claims

1. A method for modifying configuration parameters on a user equipment, wherein said user equipment (CPE) is connected to an Auto Configuration Server-Gateway (ACS-GW) via a communication protocol, said method being **characterized in that** it comprises:
a) receiving, a Policy Manager (PM) entity implemented in a first architecture, a request concerning at least one policy rule that govern the conditions of a particular service that a user is using;
b) receiving, said Auto Configuration Server-Gateway (ACS-GW) implemented in a second architecture and connected to said Policy Manager (PM) entity via an specific interface, a response, from said Policy Manager (PM) entity, to said request comprising said policy rule governing the conditions of said particular service that a user is using;
c) establishing, said Auto Configuration Server-Gateway (ACS-GW), a configuration for said user equipment (CPE) according to said received policy rule and further providing the established configuration to said user equipment (CPE); and
d) modifying, the user equipment (CPE), its configuration parameters according to said providing.

2. The method of claim 1, wherein said request in said step a) is performed by a service provider through an Application Function (AF) entity of said first architecture.

3. The method of claim 1, wherein said request in said step a) is performed by said Auto Configuration Server-Gateway (ACS-GW).

4. The method of claim 3, wherein previous the Auto Configuration Server-Gateway (ACS-GW) performing said request, the user equipment (CPE) demands to said Auto Configuration Server-Gateway (ACS-GW) information regarding said configuration parameters, said demand comprising data categorizing the user equipment (CPE) including at least model of the equipment, version, telephone number and/or line identification.

5. The method of any of previous claims, wherein said established configuration for the CPE is further stored in a database of the Auto Configuration Server-Gateway (ACS-GW).

6. The method of claim 1, comprising performing said steps b), c) and d) every time that said policy rule governing the conditions of said particular service is modified by the Policy Manager (PM) entity.

7. The method of previous claims 1 or 6, wherein said Policy Manager (PM) entity is a Policy and Charging Rules Function (PCRF) and said first architecture comprises a Third Generation Partnership Project or 3GPP architecture, so that said first and second architectures being different architectures.

8. The method of previous claims 1 or 6, wherein said Policy Manager (PM) entity is a Policy Decision Point (PDP) and said first architecture comprises a BroadBand Forum or BBF architecture, so that said first and second architectures being a same architecture.

9. A system for modifying configuration parameters on a user equipment, wherein said user equipment (CPE) is connected to an Auto Configuration Server-Gateway (ACS-GW) via a communication protocol, said system being **characterized in that** it comprises:
- a Policy Manager (PM) entity implemented in a first architecture configured to receive a request concerning at least one policy rule that govern the conditions of a particular service that a user is using;
- said ACS-GW implemented in a second architecture and connected to said Policy Manager (PM) entity via a specific interface (Gua), said Auto Configuration Server-Gateway (ACS-GW) being at least configured to:
- receive a response from said Policy Manager (PM) entity to said request comprising said policy rule governing the conditions of said particular service;
- establish a configuration for said user equipment (CPE) according to said received policy rule; and
- provide said established configuration to said user equipment (CPE) allowing the latter for a modification of its configuration parameters.

10. The system of claim 9, wherein said Auto Configuration Server-Gateway (ACS-GW) comprises:
- a first communication unit, adapted to include said specific interface and configured to communicate with said Policy Manager (PM) entity;
- an adaptation unit, configured to translate said received policy rule from the Policy Manager (PM) entity to said communication protocol appropriate for said user equipment (CPE) and vice versa; and
- a second communication unit, adapted to include a communication interface and configured to communicate with said user equipment (CPE).

11. The system of previous claims 9 or 10, wherein said Auto Configuration Server-Gateway (ACS-GW) further comprises a database.

12. The system of previous claims 9 or 10, wherein said specific interface comprises information exchange and invokes instructions, over a protocol including at least a DIAMETER protocol and said communication protocol comprises a TR-069 protocol.

13. The system of previous claims 9 or 10, wherein said Policy Manager (PM) entity is a Policy and Charging Rules Function (PCRF) of the Third Generation Partnership Project or 3GPP or a Policy Decision Point (PDP) of the BroadBand Forum or BBF.

14. The system of previous claims 9 or 10, wherein said user equipment (CPE) at least comprises one of a router, a switch or a gateway.

15. An Auto Configuration Server-Gateway, comprising:
- a first communication unit adapted to include an specific interface allowing communication with a Policy Manager (PM) entity, said communication comprising at least receiving a policy rule from said Policy Manager (PM) entity;
- an adaptation unit configured to translate said received policy rule to a communication protocol appropriate for a user equipment (CPE) connected to said Auto Configuration Server-Gateway (ACS-GW) and vice versa; and
- a second communication unit adapted to include a communication interface and configured to communicate with said user equipment (CPE),
wherein said Policy Manager (PM) entity comprises a Policy and Charging Rules Function (PCRF) or a Policy Decision Point (PDP).
